# EUROPÄISCHE PATENTANMELDUNG

(11) **EP 1 844 987 A1**
(43) Veröffentlichungstag der Anmeldung: **17.10.2007**
(21) Anmeldenummer: 06007752.6
(22) Anmeldetag: 12.04.2006
(51) Int. Cl.: B60R 11/02

(54) **Einbaugerät für ein Kraftfahrzeug**

(71) Anmelder: Delphi Technologies, Inc., Troy, Michigan 48007 (US)
(72) Erfinder: Gieseke, Arnold, 31180 Giesen (DE)
(74) Vertreter: Manitz, Finsterwald & Partner GbR

(57) **Zusammenfassung**

Die vorliegende Erfindung betrifft ein Einbaugerät für ein Kraftfahrzeug mit einem Gehäuse (2), an dessen Vorderseite Kontaktelemente (4) zum Kontaktieren einer an dieser Vorderseite befestigbaren Frontblende mit Bedienelementen zur Betätigung des Einbaugerätes vorgesehen sind. Das Gehäuse weist zudem ein Anschlusselement (8) auf, über welches eine elektrische Verbindung mit außerhalb des Einbaugerätes in dem Kraftfahrzeug vorgesehenen Bedienelementen für das Einbaugerät herstellbar ist.

## Beschreibung

Die vorliegende Erfindung betrifft ein Einbaugerät für ein Kraftfahrzeug, beispielsweise einen digitalen Tachographen, ein Mautgerät oder auch ein Navigationssystem oder ein Autoradio.

Derartige Geräte werden üblicherweise in einen zu diesem Zweck meistens im Armaturenbrett des Kraftfahrzeuges vorgesehenen Schacht nach DIN ISO 7736 eingebaut und besitzen eine Frontblende mit Bedienelementen, über die der Fahrer des Kraftfahrzeuges das Einbaugerät betätigen kann.

Da heutzutage in Kraftfahrzeugen immer mehr unterschiedliche Einbaugeräte gleichzeitig verwendet werden, ist der herkömmliche Einbau in einen Schacht nach DIN ISO 7736 nicht immer für alle verwendeten Einbaugeräte möglich und sinnvoll. Insbesondere in Lastkraftwägen werden immer häufiger so viele verschiedene Einbaugeräte benötigt, dass diese nicht alle in entsprechenden Schächten im Bereich des Armaturenbretts untergebracht werden können.

Daher sind inzwischen bereits Einbaugeräte auf dem Markt erhältlich, die nicht zum Einbau in einen Schacht nach DIN ISO 7736 bestimmt sind, sondern an anderer Stelle in dem Kraftfahrzeug eingebaut werden können, beispielsweise unter einem Sitz oder unter der Decke der Fahrerkabine eines Lastkraftwagens. Derartige Einbaugeräte müssen nach dem Einbau mit Bedienelementen verbunden werden, die für den Fahrer zugänglich sind und sich also beispielsweise im Bereich des Armaturenbretts befinden.

Die Zulassung für ein neues Mautgerät oder einen digitalen Tachographen zu erhalten, ist für den Hersteller mit hohem Aufwand und vor allem mit hohen Kosten verbunden. Es ist daher aus ökonomischen Gründen nicht wünschenswert, für einen Einbau in einem Schacht nach DIN ISO 7736 und einen Einbau an anderer Stelle in einem Fahrzeug jeweils unterschiedliche Geräte zu entwickeln, und für diese beiden unterschiedlichen Geräte jeweils separat das kostspielige Zulassungsverfahren zu durchlaufen.

Es ist daher die Aufgabe der vorliegenden Erfindung, ein Einbaugerät für ein Kraftfahrzeug zur Verfügung zu stellen, welches ohne technische Schwierigkeiten sowohl in einen Schacht nach DIN ISO 7736 als auch an anderer Stelle in einem Kraftfahrzeug eingebaut werden kann.

Diese Aufgabe wird durch ein Einbaugerät gemäß Anspruch 1 gelöst. Erfindungsgemäß sind an der Vorderseite des Einbaugerätes Kontaktelemente zum Kontaktieren einer an dieser Vorderseite befestigbaren Frontblende mit Bedienelementen zur Betätigung des Einbaugerätes vorgesehen. Überdies weist das Gehäuse ein Anschlusselement auf, über welches eine elektrische Verbindung mit außerhalb des Einbaugerätes in dem Kraftfahrzeug vorgesehenen Bedienelementen für das Einbaugerät herstellbar ist.

Wenn das Einbaugerät in einem Schacht nach DIN ISO 7736 montiert werden soll, wird eine Frontblende auf die Vorderseite des Einbaugerätes aufgesetzt. Über die an dieser Vorderseite vorgesehenen Kontaktelemente wird ein elektrischer Kontakt mit der Frontblende hergestellt, so dass das Einbaugerät mit Hilfe der an der Frontblende vorgesehenen Bedienelemente betätigt werden kann.

Wenn das gleiche Einbaugerät nicht in einem Schacht nach DIN ISO 7736 sondern an anderer Stelle in einem Fahrzeug eingebaut werden soll, so wird keine Frontblende verwendet. Stattdessen wird über das zusätzlich vorgesehene Anschlusselement eine elektrische Verbindung mit außerhalb des Einbaugerätes in dem Kraftfahrzeug vorgesehenen Bedienelementen zur Betätigung des Einbaugerätes hergestellt. Diese Bedienelemente können beispielsweise an dem Armaturenbrett oder an dem Lenkrad vorgesehen sein, und können entweder nur zur Betätigung des Einbaugerätes oder auch zur Betätigung mehrerer Geräte dienen.

Das gleiche Einbaugerät kann somit sowohl in einem Schacht nach DIN ISO 7736 als auch an einem beliebigen anderen Ort in einem Fahrzeug eingebaut werden.

Nach einer besonders bevorzugten Ausführungsform der Erfindung ist das Anschlusselement als Anschluss für einen Feldbus, insbesondere einen CAN-Bus oder einen MOST-Bus ausgebildet. Über einen Anschluss für einen CAN-Bus (Controller Area Network) kann das Einbaugerät an ein in dem Kraftfahrzeug vorhandenes CAN-Bus-Netz angeschlossen werden, über welches gegebenenfalls neben Betätigungssignalen für das Einbaugerät beispielsweise auch von einem Geschwindigkeitssensor gelieferte Daten übertragen werden können. Über einen Anschluss für einen MOST-Bus (Media Oriented System Transport) kann das Einbaugerät in analoger Weise an ein in dem Fahrzeug vorhandenes MOST-Netzwerk angeschlossen werden, wie es für Multimediaanwendungen in Kraftfahrzeugen üblicherweise verwendet wird.

Nach einer bevorzugten Ausführungsform der Erfindung ist das Anschlusselement an einer Gehäuserückseite angeordnet. Dadurch kann die elektrische Verbindung mit den außerhalb des Einbaugerätes in dem Kraftfahrzeug vorgesehenen Bedienelementen optisch unauffällig und vor Manipulationen vergleichsweise sicher hergestellt werden.

Alternativ kann das Anschlusselement aber auch an der Vorderseite des Gehäuses oder an einer der Seitenflächen angeordnet sein. Ein ebenso wie die Kontaktelemente zur Kontaktierung der Frontblende an der Vorderseite des Gehäuses angeordnetes Anschlusselement hat den Vorteil, dass es bei montierter Frontblende nicht zugänglich ist, wodurch unerwünschte Manipulationen an dem in diesem Fall im Normalfall nicht benötigten Anschlusselement vermieden werden.

Vorzugsweise sind die an der Frontblende vorgesehenen Bedienelemente und die außerhalb des Einbaugerätes in dem Kraftfahrzeug vorgesehenen Bedienelemente jeweils alternativ zur Betätigung des Einbaugerätes verwendbar. Wenn eine Frontblende auf das Einbaugerät aufgesetzt ist, kann das Einbaugerät also nur über die an dieser Frontblende vorgesehenen Bedienelemente betätigt werden. Wird hingegen keine Frontblende verwendet, sondern über das Anschlusselement eine elektrische Verbindung mit externen Bedienelementen hergestellt, so dienen ausschließlich diese zur Betätigung des Einbaugerätes.

Das Gehäuse weist vorteilhafterweise Rastelemente auf, welche mit dazu passenden Rastelementen an der Frontblende verrastbar sind. Mit Hilfe dieser Rastelemente kann die Frontblende auf einfache Weise an der Vorderseite des Einbaugerätes befestigt werden. Die Rastelemente können dabei so ausgebildet sein, dass die Verrastung nicht lösbar ist, so dass die Frontblende nach Befestigung an dem Einbaugerät nicht mehr demontiert werden kann. Dadurch werden eine unerwünschte Demontage der Frontblende und eine Manipulation der Kontaktelemente des Einbaugerätes ausgeschlossen.

Nach einer weiteren vorteilhaften Ausführungsform der Erfindung ist eine Datenübertragung von und zu dem Einbaugerät über das Anschlusselement nicht möglich, wenn ein Kontakt zwischen den Kontaktelementen an der Vorderseite des Gehäuses und einer Frontblende hergestellt ist. Beispielsweise kann eine elektrische Verbindung innerhalb des Einbaugerätes zu dem Anschlusselement unterbrochen werden, sobald ein Kontakt zwischen den Kontaktelementen und einer Frontblende hergestellt worden ist. Dadurch wird eine Manipulation des Einbaugerätes über die Anschlusselemente ausgeschlossen, wenn eine Frontblende mit entsprechenden Bedienelementen an dem Gerät befestigt ist.

Umgekehrt ist das Einbaugerät vorteilhafterweise so ausgebildet, dass eine Datenübertragung von und zu dem Einbaugerät über die Kontaktelemente nicht möglich ist, wenn über das Anschlusselement eine Verbindung mit außerhalb des Einbaugeräts vorgesehenen Bedienelementen hergestellt ist. Auch hier kann beispielsweise eine einfache Unterbrechung einer zu den Kontaktelementen führenden Leitung innerhalb des Einbaugerätes zu der gewünschten Funktionalität führen. Dadurch wird eine unerwünschte Manipulation der Kontaktelemente vermieden, wenn diese nicht zur Kontaktierung einer Frontblende benötigt werden.

Vorzugsweise ist eine elektronische Kennung zwischen der Frontblende und dem Einbaugerät austauschbar. Eine solche Kennung kann ähnlich wie eine Verrastung der Frontblende mit der Gehäusevorderseite dazu dienen, eine Demontage der Frontblende und/oder Manipulationen des Einbaugerätes über die Kontaktelemente oder das Anschlusselement nach der Montage einer Frontblende zu verhindern, da das Einbaugerät mit Hilfe der elektronischen Kennung die ihm einmal zugewiesene Frontblende identifizieren und die Annahme von nicht von dieser Frontblende stammenden Signalen verweigern kann.

Gemäß einer besonders vorteilhaften Ausführungsform der Erfindung erfolgt die Datenübertragung zwischen der Frontblende und dem Einbaugerät verschlüsselt. Es kann beispielsweise das gleiche Verschlüsselungsverfahren verwendet werden, mit dem von einem Geschwindigkeitssensor an einen digitalen Tachographen zu übertragende Daten verschlüsselt werden. Eine solche Verschlüsselung trägt ebenfalls zur Sicherheit des Einbaugerätes vor Manipulationen bei.

In gleicher Weise kann selbstverständlich auch die Datenübertragung zwischen dem Anschlusselement und den außerhalb des Einbaugerätes in dem Kraftfahrzeug vorgesehenen Bedienelementen verschlüsselt erfolgen.

Vorzugsweise findet bei auf der Vorderseite dieses Gehäuses befestigter Frontblende automatisch eine Kontaktierung der Kontaktelemente statt. Dadurch wird sichergestellt, dass eine Frontblende nach ihrer Montage in jedem Fall auch funktionstüchtig ist.

Im Folgenden wird die vorliegende Erfindung anhand eines bevorzugten Ausführungsbeispiels und unter Bezugnahme auf die beigefügte Figur näher beschrieben.

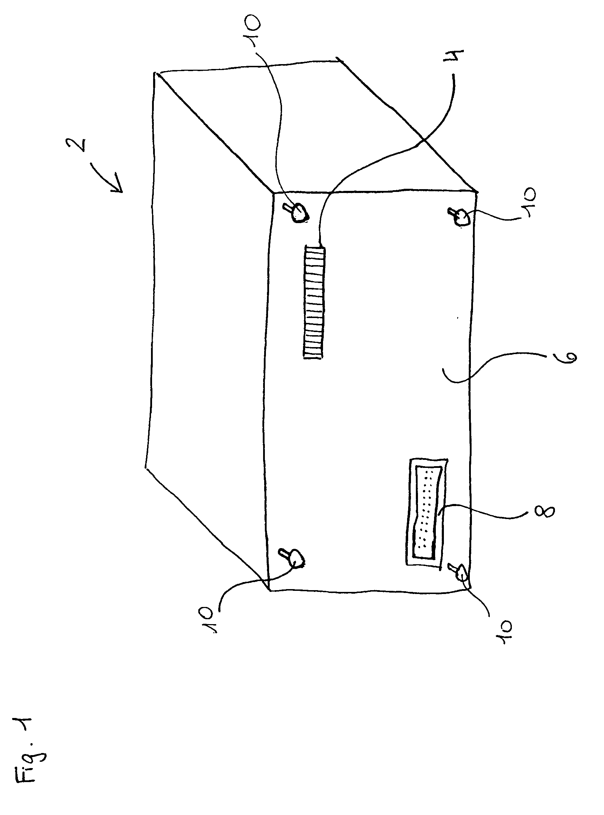

Dabei zeigt die beigefügte einzige Fig. 1 eine perspektivische Ansicht eines Einbaugerätes ohne Frontblende.

Das in Fig. 1 perspektivisch dargestellte Einbaugerät besitzt ein quaderförmiges Gehäuse 2, dessen Abmessungen denen eines Schachtes nach DIN ISO 7736 entsprechen. Die Tiefe des Gehäuses ist allerdings geringer als die genormte Tiefe eines solchen Schachtes, so dass bei einem Einbau des Gerätes in einen Schacht nach DIN ISO 7736 ausreichend Platz für eine auf einer Vorderseite 6 des Gehäuses 2 zu montierende, in der Figur nicht dargestellte Frontblende verbleibt.

Zur Montage der Frontblende sind auf der Vorderseite 6 des Gehäuses 2 insgesamt vier jeweils pilzförmige Rastelemente 10 vorgesehen. Diese können in entsprechende Rastausnehmungen an der Frontblende einrasten, wodurch eine nicht lösbare Verrastung des Gehäuses 2 mit der Frontblende gebildet wird.

Die Frontblende kontaktiert dann das Einbaugerät über auf der Vorderseite 6 des Gehäuses 2 vorgesehene Kontaktelemente 4. Über diese Kontaktelemente 4 können sowohl die Betätigung des Einbaugerätes betreffende Informationen von der Frontblende an das Einbaugerät, als auch beispielsweise in einem Display der Frontblende anzuzeigende Informationen von dem Einbaugerät an die Frontblende übertragen werden.

Des Weiteren weist das Gehäuse 2 des Einbaugerätes an seiner Vorderseite 6 ein Anschlusselement 8 auf, welches als Anschluss für einen Feldbus, beispielsweise einen CAN-Bus ausgebildet ist. Über dieses Anschlusselement 8 kann, wenn keine Frontblende auf der Vorderseite 6 montiert ist, eine Verbindung zwischen dem Einbaugerät und an anderer Stelle in dem Kraftfahrzeug vorgesehenen Bedienelementen zur Betätigung des Einbaugerätes hergestellt werden. Gleichzeitig kann das Einbaugerät über das Anschlusselement zum Austausch von Informationen mit Sensoren oder anderen Vorrichtungen an ein in dem Fahrzeug vorgesehenes BUS-Netz angeschlossen werden.

Dadurch, dass das Anschlusselement 8 auf der Vorderseite 6 des Gehäuses 2 ausgebildet ist, auf der auch eine Frontblende montiert werden kann, wird bereits auf mechanische Weise verhindert, dass bei aufgesetzter Frontblende das Anschlusselement 8 manipuliert wird. Um umgekehrt eine Manipulation der Kontaktelemente 4 zu verhindern, wenn über das Anschlusselement 8 eine Verbindung mit Bedienelementen an anderer Stelle in dem Fahrzeug hergestellt ist, wird die elektrische Verbindung des Einbaugerätes zu den Kontaktelementen 4 unterbrochen, sobald eine Verbindung über das Anschlusselement 8 hergestellt ist.

Das Anschlusselement 8 kann selbstverständlich auch an anderer Stelle an dem Gehäuse 2 vorgesehen sein, insbesondere an der der Vorderseite 6 gegenüber liegenden Gehäuserückseite. In diesem Fall kann das Anschlusselement 8 bei montierter Frontblende zusätzlich elektronisch vor Manipulationen gesichert werden.

### Bezugszeichenliste

- 2: Gehäuse
- 4: Kontaktelemente
- 6: Vorderseite des Gehäuses
- 8: Anschlusselement
- 10: Rastelemente

## Patentansprüche

1. Einbaugerät für ein Kraftfahrzeug mit einem Gehäuse (2), an dessen Vorderseite (6) Kontaktelemente (4) zum Kontaktieren einer an dieser Vorderseite (6) befestigbaren Frontblende mit Bedienelementen zur Betätigung des Einbaugerätes vorgesehen sind,
**dadurch gekennzeichnet,**
**dass** das Gehäuse (2) zudem ein Anschlusselement (8) aufweist, über welches eine elektrische Verbindung mit außerhalb des Einbaugerätes in dem Kraftfahrzeug vorgesehenen Bedienelementen für das Einbaugerät herstellbar ist.

2. Einbaugerät nach Anspruch 1,
**dadurch gekennzeichnet,**
**dass** das Anschlusselement (8) als Anschluss für einen Feldbus, insbesondere einen CAN-Bus oder einen MOST-Bus ausgebildet ist.

3. Einbaugerät nach Anspruch 1 oder 2,
**dadurch gekennzeichnet,**
**dass** das Anschlusselement (8) an einer Gehäuserückseite angeordnet ist.

4. Einbaugerät nach einem der vorstehenden Ansprüche,
**dadurch gekennzeichnet,**
**dass** die an der Frontblende vorgesehenen Bedienelemente und die außerhalb des Einbaugerätes in dem Kraftfahrzeug vorgesehenen Bedienelemente alternativ zur Betätigung des Einbaugerätes verwendbar sind.

5. Einbaugerät nach einem der vorstehenden Ansprüche,
**dadurch gekennzeichnet,**
**dass** das Gehäuse (2) Rastelemente (10) aufweist, welche mit dazu passenden Rastelementen an der Frontblende verrastbar sind.

6. Einbaugerät nach einem der vorstehenden Ansprüche,
**dadurch gekennzeichnet,**
**dass** eine Datenübertragung von und zu dem Einbaugerät über das Anschlusselement (8) nicht möglich ist, wenn ein Kontakt zwischen den Kontaktelementen (4) an der Vorderseite (6) des Gehäuses (2) und einer Frontblende hergestellt ist.

7. Einbaugerät nach einem der vorstehenden Ansprüche,
**dadurch gekennzeichnet,**
**dass** eine Datenübertragung von und zu dem Einbaugerät über die Kontaktelemente (4) nicht möglich ist, wenn über das Anschlusselement (8) eine Verbindung mit außerhalb des Einbaugerätes vorgesehenen Bedienelementen hergestellt ist.

8. Einbaugerät nach einem der vorstehenden Ansprüche,
**dadurch gekennzeichnet,**
**dass** eine elektronische Kennung zwischen der Frontblende und dem Einbaugerät austauschbar ist.

9. Einbaugerät nach einem der vorstehenden Ansprüche,
**dadurch gekennzeichnet,**
**dass** die Datenübertragung zwischen der Frontblende und dem Einbaugerät verschlüsselt erfolgt.

10. Einbaugerät nach einem der vorstehenden Ansprüche,
**dadurch gekennzeichnet,**
**dass** bei auf der Vorderseite des Gehäuses befestigter Frontblende automatisch eine Kontaktierung der Kontaktelemente (4) stattfindet.
